# EUROPEAN PATENT APPLICATION

(11) **EP 4 446 473 A1**
(43) Date of publication of application: **16.10.2024**
(21) Application number: 24167603.0
(22) Date of filing: 28.03.2024
(51) Int. Cl.: C25B 1/04, C25B 9/23, C25B 11/032, C25B 11/052, C25B 11/063

(54) **ELECTROLYSIS CELL HAVING LOCALIZED ELECTRONIC CONTACT POROUS TRANSPORT LAYER**

(30) Priority: 14.04.2023 US 202318134842
(71) Applicant: Robert Bosch GmbH, 70442 Stuttgart (DE)
(72) Inventor: Cheng, Lei, San Jose, CA 95131 (US); Stuehmeier, Bjoern, Santa Clara, CA 95054 (US); Van Brunt, Alexander, Sunnyvale, CA 94085 (US); Mojica, Felipe, Sunnyvale, CA 94085 (US); Braaten, Jonathan, Sunnyvale, CA 94086 (US); Mehrazi, Shirin, Sunnyvale, CA 94085 (US)

(57) **Abstract**

An electrolysis cell for electrolyzing water into hydrogen and oxygen. The electrolysis cell includes a current collector, a porous transport layer (PTL), and a PTL coating. The current collector may include a flow field plate having lands and channels collectively forming a flow field. The porous transport layer (PTL) includes a PTL surface facing the current collector and including a PTL surface morphology. The PTL coating is deposited on the PTL surface morphology to form contact regions between the flow field plate and the PTL. The PTL includes noncontact regions between the contact regions along the PTL surface morphology. The noncontact regions are spaced apart from the flow field plate.

## Description

### TECHNICAL FIELD

The present disclosure relates to an electrolysis cell having a localized electronic contact porous transport layer (PTL) or porous transport electrode (PTE).

### BACKGROUND

An electrolysis cell is configured to electrolyze water into hydrogen and oxygen. Water electrolysis is a promising source for green hydrogen to usher in an energy transition toward fully renewable energy consumption. One type of electrolysis cell is a proton exchange membrane electrolysis cell (PEMEC).

PEMECs may use expensive and scarce electrode catalyst materials and corrosion resistant but less conductive materials in their operation. The current utilization of these materials may lead to local current and degradation hot spots within the PEMEC, thereby reducing the efficiency and lifetime of the PEMEC. Further, these materials may be unevenly used or underutilized during PEMEC operation, leading to higher loadings than are necessary with a properly distributed and/or utilized catalyst.

### SUMMARY

Components of an electrolysis cell (e.g., a proton exchange membrane electrolysis cell (PEMEC)) include a porous transport layer (PTL), an anode, and a current collector (e.g., flow field plate). During a regular operating state of an electrolysis cell, the PTL on the anode side of the cell is subjected to an extremely oxidative environment. The contributors to this extremely oxidative environment are acidic conditions, electronic potential, and presence of oxygen. The oxidation of the PTL may lead to high electrical contact resistance between the current collector (e.g., the flow field plate) and the PTL. Currently proposed PTLs are coated completely with platinum to provide a conductive protective layer to combat the high electrical contact resistance, but at an increased cost.

In one or more embodiments, a PTL coating partially covers a PTL surface at an interface between the PTL and the current collector. For instance, the PTL coating may be deposited on a PTL surface morphology to form contact regions between the current collector and the PTL. The PTL includes noncontact regions between the contact regions along the PTL surface morphology where the noncontact regions are spaced apart from the current collector. The use of localized and selective PTL coating at an interface may reduce costs of the PTL.

### BRIEF DESCRIPTION OF THE DRAWINGS

Figure 1 is a schematic, cross sectional view of a proton exchange membrane electrolysis cell (PEMEC) depicting limited contact points between a porous transport layer (PTL) and an anode catalyst layer that may result in local current and degradation hot spots.
Figure 2 is a schematic, cross sectional view of a PEMEC depicting limited contact points between a PTL and a flow field plate that may result in local current and degradation hot spots.
Figure 3 is a schematic, cross sectional view of a portion of a PEMEC including a porous transport electrode (PTE) where the anode catalyst layer is deposited on the surface morphology of a PTL and an ionomer is infiltrated to the surface porosity of the PTE according to one embodiment.
Figure 4 is a schematic, cross sectional view of a portion of a PEMEC including localized anode catalyst layer portions deposited on a PTL according to one embodiment.
Figure 5 is a schematic, cross sectional view of a portion of a PEMEC including localized PTL protective coating portions in contact with the current collector or flow field plate according to one embodiment.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. These terms may be used to modify any numeric value disclosed or claimed herein. Generally, the term "about" denoting a certain value is intended to denote a range within ± 5% of the value. As one example, the phrase "about 100" denotes a range of 100 ± 5, i.e., the range from 95 to 105. Generally, when the term "about" is used, it can be expected that similar results or effects according to the invention can be obtained within a range of ± 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1 to 10 explicitly includes 1, 2, 3, 4, 5, 6, 7, 8, 9, and 10. Similarly, the range 1 to 100 includes 1, 2, 3, 4, .... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits.

In the examples set forth herein, concentrations, temperature, and reaction conditions (e.g., pressure, pH, flow rates, etc.) can be practiced with plus or minus 50 percent of the values indicated rounded to or truncated to two significant figures of the value provided in the examples. In a refinement, concentrations, temperature, and reaction conditions (e.g., pressure, pH, flow rates, etc.) can be practiced with plus or minus 30 percent of the values indicated rounded to or truncated to two significant figures of the value provided in the examples. In another refinement, concentrations, temperature, and reaction conditions (e.g., pressure, pH, flow rates, etc.) can be practiced with plus or minus 10 percent of the values indicated rounded to or truncated to two significant figures of the value provided in the examples.

As used herein, the term "and/or" means that either all or only one of the elements of said group may be present. For example, "A and/or B" means "only A, or only B, or both A and B". In the case of "only A", the term also covers the possibility that B is absent, i.e., "only A, but not B".

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

The term "comprising" is synonymous with "including," "having," "containing," or "characterized by." These terms are inclusive and open-ended and do not exclude additional, unrecited elements or method steps.

The phrase "consisting of' excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of' limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed and claimed subject matter can include the use of either of the other two terms.

The term "one or more" means "at least one" and the term "at least one" means "one or more." The terms "one or more" and "at least one" include "plurality" as a subset.

The description of a group or class of materials as suitable for a given purpose in connection with one or more embodiments implies that mixtures of any two or more of the members of the group or class are suitable. Description of constituents in chemical terms refers to the constituents at the time of addition to any combination specified in the description and does not necessarily preclude chemical interactions among constituents of the mixture once mixed. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

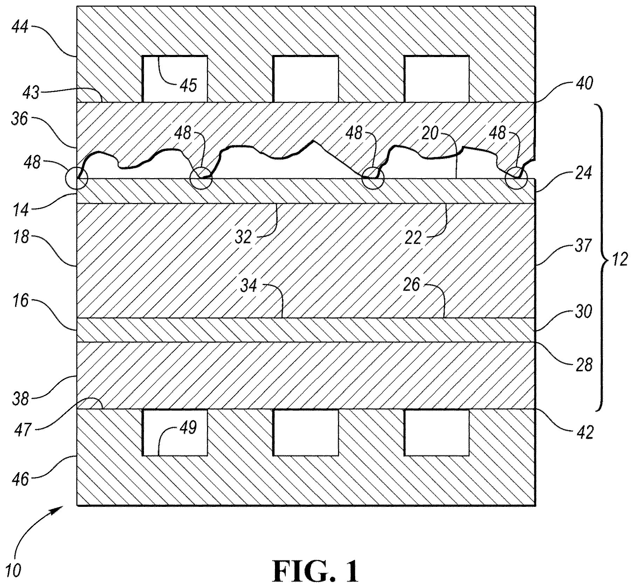

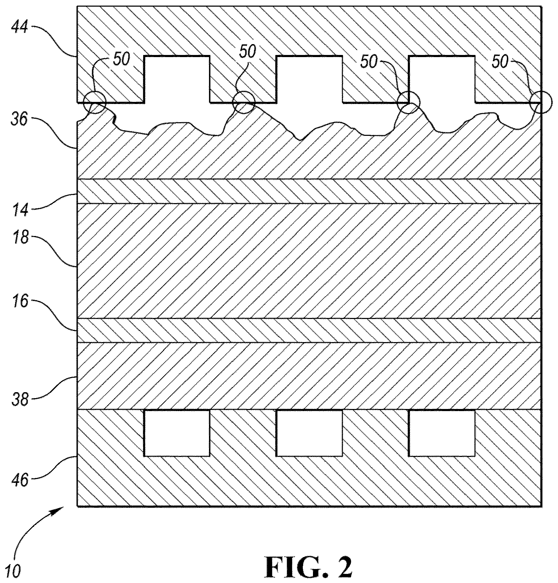

Figure 1 is a schematic, cross sectional view of proton exchange membrane electrolysis cell (PEMEC) 10 highlighting limited contact points between a porous transport layer (PTL) and an anode catalyst layer that may result in local current and degradation hot spots. Figure 2 depicts a schematic, cross sectional view of PEMEC 10 highlighting limited contact points between a PTL and a flow field plate or current collector that may result in local current and degradation hot spots.

PEMEC 10 may be stacked to create a PEMEC stack or system. PEMEC 10 includes membrane electrode assembly (MEA) 12. MEA 12 includes anode catalyst layer 14, anode porous transport layer (PTL) 36 with or without a microporous layer (MPL) (or mesoporous layer), cathode catalyst layer 16, cathode gas diffusion media (GDM) 38, and proton conducting membrane 18 sandwiched between anode catalyst layer14 and cathode catalyst layer 16. Anode catalyst layer 14 and cathode catalyst layer 16 are separated by proton conducting membrane 18.

As part of the operation of PEMEC 10, an oxygen evolution reaction (OER) occurs at anode catalyst layer 14 and a hydrogen evolution reaction (HER) occurs at cathode catalyst layer 16 with H⁺ ions (protons) flowing through the proton conducting membrane 18 from anode catalyst layer 14 to cathode catalyst layer 16.

Anode catalyst layer 14 may include an anode catalyst material supported on an anode catalyst support. Cathode catalyst layer 16 may include a cathode catalyst material supported on a cathode catalyst support. The cathode catalyst material may include but is not limited to platinum deposited on a carbon support. The anode catalyst material may be iridium (Ir), iridium oxide (IrOₓ), where x is in a range of 2 to 4, ruthenium (Ru), ruthenium oxide (RuOₓ), where x is in a range of 1.8 to 2.2, or a combination thereof. In one or more embodiments, the anode catalyst material is configured to combat the acidic environment of PEMEC 10, the sluggish kinetics of the OER, and/or the presence of highly corrosive anode potentials (> 1.5V). The anode support material may be formed of titanium (Ti), titanium oxide (TiO₂), or a combination thereof. Anode catalyst layer 14 and/or cathode catalyst layer 16 may include a catalyst material, a catalyst support, and an ionic polymer or ionomer binder. The anode and/or cathode may be referred to as the electrodes of PEMEC 10. In one or more embodiments, the electrodes have primary and secondary pores in a range of less than 1 µm. Proton conducting membrane 18 may be a polymer electrolyte membrane (PEM) including an ionomer material. The ionomer material includes an ionomer and optionally a filler (e.g., silica nanospheres, polytetrafluoroethylene (PTFE) reinforcement, radical scavengers, and/or recombination catalysts). The ionomer may be perfluorinated sulfonic acid ionomer, a high oxygen permeable ionomer, a hydrocarbon ionomer, an ion conducting polymer, or a combination thereof.

Anode catalyst layer 14 includes first surface 20 and second surface 22 and bulk region 24 extending therebetween. Cathode catalyst layer 16 includes first surface 26 and second surface 28 and bulk region 30 extending therebetween. Proton conducting membrane 18 includes first surface 32 and second surface 34 and bulk region 37 extending therebetween. In one or more embodiments, second surface 22 of anode catalyst layer 14 contacts first surface 32 of proton conducting membrane 18. In one or more embodiments, second surface 34 of proton conducting membrane 18 contacts first surface 26 of cathode catalyst layer 16.

As shown in Figure 1, first side 40 and second side 42 of MEA 12 are bounded by first flow field plate 44 and second flow field plate 46, respectively. Flow fields may also be described as current collectors. First flow field plate 44 includes a network of lands 43 and channels 45. Second flow field plate 46 includes a network of lands 47 and channels 49. In one or more embodiments, first flow field plate and second flow field plate 46 have macroscale channels of the flow field plate formed by the lands and channels having a width in a range of 0.1 to 10.0 mm.

MEA 12 also includes PTL 36 and gas diffusion media (GDM) 38. As shown in Figure 1, PTL 36 is adjacent first surface 20 of anode catalyst layer 14, and GDM 38 is adjacent second surface 28 of cathode catalyst layer 16. PTL 36 may be formed of titanium (Ti), titanium oxide (TiO₂), or a titanium alloy. PTL 36 is configured to transport reactants and products (i.e., water and O₂) between anode catalyst layer 14 and first flow field plate 44. In one or more embodiments, PTL 36 is configured to bridge the gap between the microscale pores of anode catalyst layer 14 and the macroscale channels of first flow field plate 44.

The anode catalyst layer may be deposited as a continuous thin film of less than 25 µm in thickness on the proton conducting membrane. While the anode catalyst layer includes anode catalyst particles that are typically smaller than 0.5 µm, the PTL structure includes pores of several tens of µm in size (e.g., 10 to 50 µm). As a result, only a small fraction of the anode catalyst layer directly contacts the PTL.

Figure 1 depicts contact points 48 between anode catalyst layer 14 and PTL 36. The low fraction of contact between the anode catalyst layer and the PTL results in a highly uneven utilization of the anode catalyst with most of the reaction (e.g., greater than 50%, 60%, 70%, and 80%) occurring at or adjacent contact points 48. This problem may become more pronounced due to the relatively low electric conductivity of the anode catalyst layer. The lack of contact points 48 may result in localized current and degradation hot spots.

The anode catalyst material situated away from contact points 48 are underutilized (e.g., mostly unutilized) due to the lack of contact between the anode catalyst material and the PTL. While a conductive MPL (e.g., formed from a titanium-based material or a conductive oxide-based material) situated between the anode catalyst layer and the PTL may improve utilization of the anode catalyst material through improved conductivity, the lack of contact areas remains problematic for the reasons stated above.

Referring to Figure 2, a small fraction of contact at contact points 50 between PTL 36 and flow field plate 44 is depicted. When the PTL is formed of titanium, the PTL may be covered with a passivating layer formed of TiO₂ that is electrically insulating to protect the PTL from the high operating potential of the anode electrode and the oxygen rich environment. The electrically insulating layer may reduce the performance of the PEMEC. These performance losses may be reduced by further coating the PTL surface with a highly conductive noble metal (e.g., platinum or gold), but at a higher cost.

What is needed are solutions to reduce local current and degradation hot spots in an electrolysis cell (e.g., a proton exchange membrane electrolysis cell (PEMEC)). These hotspots need to be reduced at different interfaces within the PEMEC system (e.g., the interface of the PTL and the anode catalyst layer and/or the interface between the PTL and a current collector). The embodiments disclosed herein provide electrolysis cells to reduce local current and degradation hot spots in electrolysis cells and/or to relieve mechanical stresses in electrolysis, thereby enhancing the performance of the electrolysis cell.

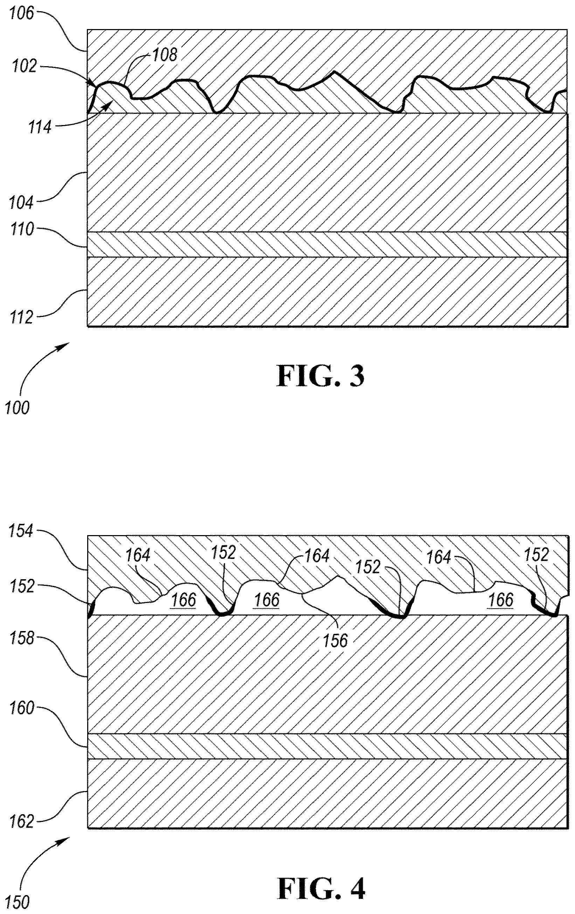

Figure 3 is a schematic, cross sectional view of a portion of PEMEC 100 including porous transport electrode (PTE) 102 according to one embodiment. While a PEMEC is depicted in Figure 3, this and other embodiments may be applied to any type of electrolysis cell (e.g., an anion exchange membrane (AEM) electrolysis cells). PEMEC 100 includes polymer electrolyte membrane (PEM) 104, porous transport layer (PTL) 106 including PTL surface 108 facing PEM 104 and including a PTL surface morphology. PEMEC 100 also includes cathode catalyst layer 110 and gas diffusion media (GDM) 112. An anode catalyst layer is deposited on the PTL surface morphology to form PTE 102 on PTL surface 108. PTE 102 has a PTE surface morphology. The deposition of the anode catalyst layer may be a surface decoration on PTL surface 108. The PTL surface morphology may include PTL pores where the anode catalyst material at least partially coats and/or occupies the PTL pores. The PTL surface morphology may include PTL pores having a PTL mean pore size and the PTE surface morphology may include PTE pores having a PTE mean pore size less than the PTL mean pore size.

The anode catalyst layer may include an anode catalyst material supported on an anode catalyst support. The anode catalyst material may be iridium (Ir), iridium oxide (IrOₓ), where x is in a range of 2 to 4, ruthenium (Ru), ruthenium oxide (RuOₓ), where x is in a range of 1.8 to 2.2, or a combination thereof. The anode catalyst material may be a crystalline material, an amorphous material, or a combination thereof. The anode catalyst support may be titanium (Ti), titanium oxide (TiO₂), or a combination thereof. The weight percent of the anode catalyst material to the anode catalyst support may be between 5 and 100 weight percent. In one or more embodiments, the anode catalyst layer consists essentially of an anode catalyst material of iridium (Ir), iridium oxide (IrOₓ), where x is in a range of 2 to 4, ruthenium (Ru), ruthenium oxide (RuOₓ), where x is in a range of 1.8 to 2.2, or a combination thereof.

In one or more embodiments, the anode catalyst layer is deposited onto the surface of the PTL such that it coats the exposed interface between the PTL and the PEM, thereby enhancing (e.g., maximizing) surface contact between the PTL and the anode catalyst layer. The enhanced surface contact provides a more distributed current to increase electron transport and decrease hot spot generation.

The anode catalyst material may also include an anode ionomer material. The anode ionomer material may be a perfluorinated sulfonic acid ionomer, a high oxygen permeable ionomer or ionomer with modified polymeric structures designed to enhance the free volume of the ionomer and enhance oxygen transport, a hydrocarbon ionomer, an ion conducting polymer, or a combination thereof. The mass fraction of the anode ionomer material in the anode catalyst layer may be between 0 and 50 percent.

The pores between the porous transport electrode (PTE) (e.g., the anode catalyst layer deposited on the PTL surface) and the PEM may be infiltrated with an ionomer material. For instance, the ionomer material may at least partially coat and/or occupy the PTE pores. The ionomer material may include a perfluorinated sulfonic acid ionomer, a high oxygen permeable ionomer or ionomer with modified polymeric structures designed to enhance the free volume of the ionomer and enhance oxygen transport, a hydrocarbon ionomer, an ion conducting polymer, or a combination thereof. The infiltrated ionomer may also include inert additives such as silica nanospheres, boronitride flakes, graphene oxide flakes, to reduce compression inside the pores of PTE 102. Figure 3 depicts infiltrated ionomer 114 with or without inert additives infiltrating into the pores of PTE 102.

In one or more embodiments, infiltrating the ionomer material into the PTE pores between the PEM and anode catalyst material improves proton conductivity and/or induces hydraulic pressure to reduce stress at the interface between the PEM and the PTL/PTE. These benefits may address the lack of mechanical support provided by the pores against the relatively high operational pressure difference between the anode and the cathode side of the MEA (e.g., up to 50 bara pressure differential in the electrolysis cell stack). In one or more embodiments, the ionomer material includes an ionomer. The ionomer may be a perfluorinated sulfonic acid ionomer, a high oxygen permeable ionomer, a hydrocarbon ionomer, an ion conducting polymer, or a combination thereof. The infiltrated ionomer may include a filler material bound to the ionomer. The filler material may be a silica nanosphere material silica nanospheres, polytetrafluoroethylene (PTFE) reinforcement, radical scavengers, recombination catalysts, boronitride flakes, graphene oxide flakes, or a combination thereof.

In one or more embodiments, the anode catalyst layer may be deposited as a thin layer on the PTL to form a PTE. Suitable deposition methods may include without limitation spray coating, vacuum infiltration, chemical vapor deposition, blade coating, hot-dipping, incipient witness techniques, and/or electrostatic deposition. In one or more embodiments, the ionomer and filler infiltration into the PTL and/or PTE may be accomplished by spray coating, vacuum infiltration, blade coating, and/or hot pressing. The combined structure of the PTL, anode, and infiltrated ionomer may be incorporated with the membrane (e.g., catalyst coated membrane) via a binding method (e.g., hot pressing) or raw assembly into an MEA.

Figure 4 is a schematic, cross sectional view of a portion of PEMEC 150 including localized anode catalyst layer portions 152 deposited on porous transport layer (PTL) 154 according to one embodiment. Porous transport layer (PTL) 154 includes PTL surface 156. PEMEC 150 also includes polymer electrolyte membrane (PEM) 158, cathode catalyst layer 160, and gas diffusion media (GDM) 162. Figure 4 depicts an example according to one embodiment of an anode electrode structure that enhances (e.g., maximizes) catalyst utilization by selectively depositing anode catalyst material only in areas of the PEM 158 that are in direct contact with PTL 154.

PTL surface 156 faces PEM 158 and includes a PTL surface morphology. An anode catalyst layer is deposited on the PTL surface morphology to form contact regions (e.g., localized anode catalyst layer portions 152) between PEM 158 and PTL 154. PTL also includes noncontact regions 164 between the contact regions along the PTL surface morphology. Noncontact regions 164 are spaced apart from PEM 158. As shown in Figure 4, noncontact regions 164 form gaps 166 extending from PEM 158 to PTL 154. The anode catalyst layer may only reside in the contact regions.

Although not shown, PTL 154 may further include a microporous layer (MPL) contacting PTL surface 156 and anode catalyst layer portions 152. The MPL has an MPL surface morphology. The anode catalyst layer may be deposited on the MPL surface morphology and/or the PTL surface morphology to form the contact regions.

The anode catalyst layer that forms localized catalyst layer portions 152 may include an anode catalyst material supported on an anode catalyst support. The anode catalyst material may be iridium (Ir), iridium oxide (IrOₓ), where x is in a range of 2 to 4, ruthenium (Ru), ruthenium oxide (RuOₓ), where x is in a range of 1.8 to 2.2, or a combination thereof. The anode catalyst material may be a crystalline material, an amorphous material, or a combination thereof. The anode catalyst support may be titanium (Ti), titanium oxide (TiO₂), or a combination thereof. The weight percent of the anode catalyst material to the anode catalyst support may be between 5 and 100 weight percent. In one or more embodiments, the anode catalyst layer consists essentially of an anode catalyst material of iridium (Ir), iridium oxide (IrOₓ), where x is in a range of 2 to 4, ruthenium (Ru), ruthenium oxide (RuOₓ), where x is in a range of 1.8 to 2.2, or a combination thereof.

The anode catalyst material may also include an anode ionomer material. The anode ionomer material may be a perfluorinated sulfonic acid ionomer, a high oxygen permeable ionomer or ionomer with modified polymeric structures designed to enhance the free volume of the ionomer and enhance oxygen transport, a hydrocarbon ionomer, an ion conducting polymer, or a combination thereof. The mass fraction of the anode ionomer material in the anode catalyst layer may be between 0 and 50 percent.

In one or more embodiments, a method of forming an electrolysis cell including anode catalyst layer portions 152 portions is disclosed. The method may include selectively depositing an anode catalyst layer onto a PTL or the surface morphology of a PTL. The anode catalyst layer is configured to form contact regions between the anode catalyst layer, the PTL, and the PEM. The PTL includes noncontact regions between the contact regions along the PTL surface morphology.

The anode catalyst layer may be deposited onto the contact regions via partial submersion in a plating solution, a liquid masking technique, brush painting, blade coating, rod coating, roller-deposition, etc. The method may further include preheating the PTL surface morphology to block noncontact regions.

The selectively depositing step may be carried out using a direct application step including directly applying a catalyst medium to the PTL, an indirect application step, or a synthesis step. The directly applying step may be carried out using brush painting, blade coating, rod coating, or dipping. The catalyst medium may be a catalyst medium ink or a catalyst medium powder. The indirect application step may include fabricating the anode catalyst layer on a substrate to obtain a fabricated anode catalyst layer and transferring the fabricated anode catalyst layer onto the PTL surface morphology. The indirect application step may be carried out using decal transfer, calendaring, hot pressing, electrostatic transfer, and/or melting. The synthesis step may include synthesizing the anode catalyst layer onto the PTL surface morphology using direct reduction, electro-plating, and/or incipient wetness.

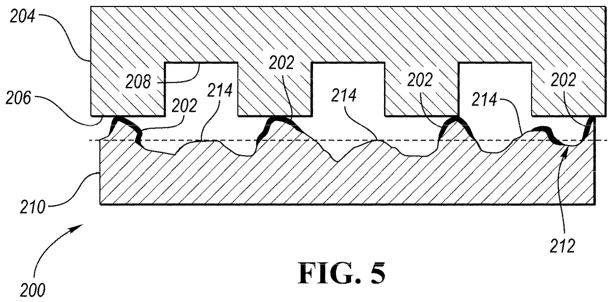

Figure 5 is a schematic, cross sectional view of a portion of PEMEC 200 including localized PTL protective coating portions 202 in contact with the current collector or flow field according to one embodiment. PEMEC 200 includes flow field plate 204 having lands 206 and channels 208 forming a flow field of PEMEC 200. While Figure 5 depicts a flow field plate, this and other embodiments may be applied to any type of current collector (e.g., collector plates, flow mesh, flow fields, flow structures, and/or bipolar plates). PEMEC 200 also includes porous transport layer (PTL) 210 including PTL surface 212.

Figure 5 depicts an example according to one embodiment of an anode PTL that enhances (e.g., maximizes) electrical conduction through the PTL by selectively depositing a PTL coating (e.g., a conductive and corrosion resistant metal) in areas of the PTL that are in direct contact with a current collector. The scale of the PTL coating may be fractions of a micron. The PTL coating may have a mean thickness of 5 nm to 0.7µm. The dotted line in Figure 5 represents a penetration depth of the PTL coating.

PTL surface 212 faces flow field plate 204 and includes a PTL surface morphology. A PTL coating is deposited on the PTL surface morphology to form contact regions (e.g., localized PTL coating portions 202) between flow field plate 204 and PTL 210. PTL 210 includes noncontact regions 214 between the contact regions along the PTL surface morphology. As depicted in Figure 5, noncontact regions 214 may be spaced apart flow field plate 204. In one or more embodiments, the contact regions contact lands 206. Noncontact regions 214 may be spaced apart from flow field plate 204 to form gaps 216 extending between channels 208 of flow field plate 204 and PTL 210. The PTL coating may only reside in the contact regions (e.g., localized PTL coating portions 202).

The PTL may be formed of a metal foam material, a porous metal sheet material, or a metal felt material. The porous metal sheet material may be formed from sintered metal particles.

The PTL coating may be formed of a conductive metal configured to resist corrosion. The conductive metal may be platinum, gold, a metal alloy, or a combination thereof.

In one or more embodiments, a method of forming an electrolysis cell including localized PTL coating portions 202 is disclosed. The method may include selectively depositing a PTL coating onto a PTL surface morphology of a PTL. The PTL coating is configured to form contact regions between the PTL and a current collector. The PTL includes noncontact regions between the contact regions along the PTL surface morphology.

The selectively depositing step may include transferring the PTL coating onto the PTL surface morphology. The transferring step may be carried out with electroless deposition, electrodeposition and/or vapor deposition. The PTL coating may be deposited onto the contact regions via partial submersion in a plating solution or a liquid masking technique.

The depositing method may further include pretreating the PTL surface morphology to remove a passivating layer from the contact regions prior to the selective depositing step. The depositing method may comprise pretreating the PTL surface morphology to block the noncontact regions.

In connection with one or more of these methods, the current collection may include a flow field plate including lands and channels collectively forming a flow field. In one or more embodiments, the noncontact regions include (a) pores embedded in the PTL surface morphology and/or (b) regions aligning with the channels of the flow field plate.

The following applications are related to the present application: U.S. Pat. Appl. Serial No. 18/134827 filed on April 14, 2023 (RBPA0434PUS) and U.S. Pat. Appl. Serial No. 18/134835 (RBPA0435PUS), both of which are incorporated by reference in their entirety.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. An electrolysis cell for electrolyzing water into hydrogen and oxygen, the electrolysis cell comprising:
a current collector;
a porous transport layer (PTL) including a PTL surface facing the current collector and including a PTL surface morphology; and
a PTL coating deposited on the PTL surface morphology to form contact regions between the current collector and the PTL, the PTL includes noncontact regions between the contact regions along the PTL surface morphology, the noncontact regions are spaced apart from the current collector.

2. The electrolysis cell of claim 1, wherein the current collector includes a flow field plate having lands and channels collectively forming a flow field, the contact regions contact the lands.

3. The electrolysis cell of claim 1, wherein the noncontact regions spaced apart from the current collector to form gaps extending from the current collector to the PTL.

4. The electrolysis cell of claim 1, wherein the PTL coating is a conductive metal configured to resist corrosion.

5. The electrolysis cell of claim 4, wherein the conductive metal is platinum, gold, a metal alloy, or a combination thereof.

6. The electrolysis cell of claim 1, wherein the PTL coating has a mean thickness of 5 nm to 0.7 µm.

7. The electrolysis cell of claim 1, wherein the PTL coating only resides in the contact regions.

8. The electrolysis cell of claim 1, wherein the PTL is formed of a metal foam material, a porous metal sheet material, or a metal felt material.

9. The electrolysis cell of claim 8, wherein the porous metal sheet material is formed from sintered metal particles.

10. An electrolysis cell for electrolyzing water into hydrogen and oxygen, the electrolysis cell comprising:
a flow field plate having lands and channels forming a flow field;
a porous transport layer (PTL) including a PTL surface facing the flow filed plate and including a PTL surface morphology; and
a PTL coating deposited on the PTL surface morphology to form contact regions between the lands of the flow field plate and the PTL, the PTL includes noncontact regions between the contact regions along the PTL surface morphology, the noncontact regions are spaced apart from the flow field plate, the noncontact regions are aligned with the channels of the flow field plate.

11. The electrolysis cell of claim 10, wherein the noncontact regions spaced apart from the flow field plate to form gaps between the flow field plate to the PTL.

12. The electrolysis cell of claim 10, wherein the PTL coating is a conductive metal configured to resist corrosion.

13. The electrolysis cell of claim 12, wherein the conductive metal is platinum, gold, a metal alloy, or a combination thereof.

14. A method of forming a porous transport layer (PTL) of an electrolysis cell for electrolyzing water into hydrogen and oxygen, the method comprising:
selectively depositing a PTL coating onto a PTL surface morphology of the PTL, the PTL coating is configured to form contact regions between the PTL and a current collector of the electrolysis cell, the PTL includes noncontact regions between the contact regions along the PTL surface morphology.

15. The method of claim 14, wherein the selectively depositing step includes transferring the PTL coating onto the PTL surface morphology.

16. The method of claim 15, wherein the transferring step is carried out with electroless deposition, electrodeposition, and/or vapor deposition.

17. The method of claim 15, wherein the PTL coating is deposited onto the contact regions via partial submersion in a plating solution or a liquid masking technique.

18. The method of claim 14, further comprising pretreating the PTL surface morphology to remove a passivating layer from the contact regions prior to the selective depositing step.

19. The method of claim 14, further comprising pretreating the PTL surface morphology to block the noncontact regions.

20. The method of claim 14, wherein the current collector includes a flow field plate including lands and channels collectively forming a flow field, the noncontact regions include (a) pores embedded in the PTL surface morphology and/or (b) regions aligning with the channels of the flow field plate.
